Europäisches Patentamt

European Patent Office

Office européen des brevets

(19)

(11) Publication number: **0 306 121 B2**

(12)

# NEW EUROPEAN PATENT SPECIFICATION

(45) Date of publication of the new patent specification: **24.05.95**

(51) Int. Cl.6: **C08F 8/38**, C08L 23/34

(21) Application number: **88302395.4**

(22) Date of filing: **18.03.88**

The file contains technical information submitted after the application was filed and not included in this specification

(54) **Chlorosulfonated ethylene.alpha-olefin copolymer composition and process for the production thereof.**

(30) Priority: **17.08.87 JP 203059/87**
**18.02.88 JP 33881/88**

(43) Date of publication of application:
**08.03.89 Bulletin 89/10**

(45) Publication of the grant of the patent:
**20.05.92 Bulletin 92/21**

(45) Mention of the opposition decision:
**24.05.95 Bulletin 95/21**

(84) Designated Contracting States:
**DE FR GB**

(56) References cited:
EP-A- 0 097 330     FR-A- 1 259 094
JP-A-58 201 805     US-A- 2 879 261
US-A- 3 206 444     US-A- 4 558 102

CHEMICAL ABSTRACTS, vol. 101, no. 24, 10th December 1984, page 54, abstract no. 212479s, Columbus, Ohio, US

(73) Proprietor: **Tosoh Corporation**
**4560, Kaisei-cho**
**Shinnanyo-shi,**
**Yamaguchi-ken (JP)**

(72) Inventor: **Nakagawa, Tatsushi**
**858-46, Oaza Mure**
**Boufu-shi**
**Yamaguchi (JP)**
Inventor: **Ishida, Yoshiaki**
**1019-6, Oaza Shimogami**
**Tokuyama-shi**
**Yamaguchi (JP)**
Inventor: **Kanesaka, Junichiro**
**4-27, Daijin 2-chome**
**Shinnanyo-shi**
**Yamaguchi (JP)**
Inventor: **Kaneshige, Yosuki**
**6727 Ikachi**
**Yanai-shi**
**Yamaguchi (JP)**

(74) Representative: **Sheard, Andrew Gregory et al**
**Kilburn & Strode**
**30, John Street**
**London WC1N 2DD (GB)**

EP 0 306 121 B2

W.Honsberg et al, "An Alternate Acid Acceptor for Compounds of Hypalon", Technical Notes, June 1983, Du Pont Company, Polymer Products Department, Elastomers Division, Wilmington, Delaware

J.R. Wolfe et al, "Maleimide Cure Systems", Rubber Age, June 1971, pp. 60-63

H.G.Ruppe et al, "HVA-" Curing Agent for Hypalon and Coagent for Peroxide Cure Systems", Chemicals for Elastomers, 59A, 1981, Du Pont Company, Wilmington, Delaware

**Description**

This invention relates to a chlorosulfonated ethylene•α-olefin copolymer composition and to a process for the production thereof. More particularly, the invention relates to a chlorosulfonated ethylene•α-olefin copolymer composition with improved heat resistance, cold resistance and water resistance of the product thereof after vulcanization.

The chlorosulfonated copolymer composition of this invention is particularly useful in the field of rubber belts such as toothed rubber belts, poly-V-belts.

A chlorosulfonated polymer typified by chlorosulfonated polyethylene has properties similar to those of chloroprene rubber.

However, since the chlorosulfonated polymer has improved heat resistance, weather resistance, and ozone resistance as compared with chloroprene rubber, the chlorosulfonated polymer is frequently used as a polymer having improved heat resistance.

Accordingly, where the heat resistance of conventional chloroprene rubber is as yet insufficient, it has been attempted to replace the chloroprene rubber with a chlorosulfonated polymer.

For example, there are rubber belts such as toothed belts and poly-V-belts made of such a chlorosulfonated polymer.

However, since chlorosulfonated polyethylene is inferior in cold resistance as compared with chloroprene rubber, it is sometimes difficult to solve the problem of the cold resistance required for a toothed belt.

On the other hand, in the field of toothed rubber belts, it is the most important technical theme to improve the water resistance of the product in addition to the aforesaid heat resistance and cold resistance thereof.

It is known that for improving the heat resistance and water resistance of the vulcanized product of chlorosulfonated polyethylene, the use of lead compound such as litharge, red lead oxide, as an acid-acceptor is effective. However, the use of such a lead compound is undesirable because of the problem of environmental pollution by toxicity of the lead compound.

As the result of various investigations for obtaining vulcanized products having improved heat resistance, cold resistance, and water resistance under the aforesaid circumstances, the inventors have arrived at the present invention.

It is desirable therefore, to provide a chlorosulfonated ethylene•α-olefin copolymer composition whose vulcanization product has improved heat resistance, cold resistance, and water resistance.

The chlorosulfonated copolymer composition of this invention is particularly effective as a composition for rubber belts such as toothed belts, poly-V-belts.

Thus, according to the present invention there is provided a chlorosulfonated ethylene•α-olefin copolymer composition comprising

(a) 100 parts by weight of a chlorosulfonated ethylene•α-olefin copolymer containing from 25 to 32% by weight chlorine and from 0.3 to 2.5% by weight sulfur,

(b) from 10 to 35 parts by weight of a hydrotalcite.

(c) from 0.5 to 5 parts by weight of a thiuram, and

(d) from 0.5 to 5 parts by weight of a maleimide.

For obtaining vulcanized products with improved heat resistance, cold resistance, and water resistance in this invention, it is important to use a specific combination of the specific components described above.

That is, the chlorosulfonated ethylene•α-olefin copolymer composition contains components (a), (b), (c), and (d) described above as indispensable components.

Preferably, the chlorosulfonated ethylene•α-olefin copolymer is a product obtained by chlorinating and chlorosulfonating an ethylene•α-olefin copolymer as the the raw material.

Suitable ethylene•α-olefin copolymers are, for example, an ethylene•butene-1 copolymer, an ethylene•propylene copolymer, an ethylene•hexene-1 copolymer, an ethylene•octene-1 copolymer, or an ethylene•4-methylpentene-1 copolymer.

In the ethylene•α-olefin copolymer, the ratio of ethylene/α-olefin is from 98/2 to 60/40.

If the ratio is outside the aforesaid range, the desired cold resistance becomes unobtainable.

A particularly preferred ethylene•α-olefin copolymer is a copolymer of ethylene and butene-1 having an ethylene/butene-1 ratio in the range of from 95/5 to 70/30.

Once the composition of ethylene and α-olefin as the raw materials for the copolymer is selected, the composition of ethylene and α-olefin is kept as it is in the chlorosulfonated ethylene•α-olefin copolymer obtained by chlorinating and chlorosulfonating the copolymer.

3

On the other hand, the mole ratio of ethylene and butene-1 may be expressed by the number of ethyl groups per 1,000 carbon atoms. That is, the component ratio of a composition having an ethylene/butene-1 ratio of from 98/2 to 60/40 may be expressed as from 10 to 200 ethyl groups per 1,000 carbon atoms.

The content of chlorine contained in the chlorosulfonated ethylene•$\alpha$-olefin copolymer is from 25 to 32% by weight.

If the chlorine content is less than 25% by weight or over 32% by weight, the desired cold resistance is unobtainable for the copolymer composition. A particularly preferred chlorine content is from 28 to 31% by weight.

The content of sulfur contained in the chlorosulfonated ethylene•$\alpha$-olefin copolymer is a measure of showing the content of the group shown by -$SO_2Cl$ acting as crosslinking sites and is from 0.3 to 2.5% by weight, preferably from 0.5 to 1.5% by weight.

For synthesizing the chlorosulfonated ethylene•$\alpha$-olefin copolymer, a method of reacting an ethylene•$\alpha$-olefin copolymer as the raw material with chlorine and sulfur dioxide, chlorine and sulfuryl chloride or sulfuryl chloride alone using a radical generating agent as a catalyst is generally employed.

For performing the aforesaid reaction, a homogeneous system of performing the reaction in a solution of the reactants may be used, a heterogeneous system of performing the reaction in a suspension may be used, and a heterogeneous system of performing the reaction in a gaseous phase may be used. The homogeneous system of performing the reaction in a solution of an ethylene•$\alpha$-olefin copolymer as a raw material dissolved in a solvent gives the chlorosulfonated ethylene•$\alpha$-olefin copolymer improved heat resistance and cold resistance and, hence, is preferably used in this invention.

In this case, a solvent inert to the halogenation reaction, such as carbon tetrachloride, chloroform, monochlorobenzene, tetrachloroethane, is used as the solvent.

According to a process aspect of the present invention there is provided a process for the preparation of a chlorosulfonated copolymer composition which process comprises adding (b) from 10 to 35 parts by weight of a hydrotalcite, (c) from 0.5 to 5 parts by weight of a thiuram, and (d) from 0.5 to 5 parts by weight of a maleimide to (a) 100 parts by weight of the chlorosulfonated ethylene•$\alpha$-olefin copolymer containing from 25 to 32% by weight chlorine and from 0.3 to 2.5% by weight sulfur.

A hydrotalcite includes hydrotalcite produced as a natural mineral in the Ural district of the Soviet Union and synthetic hydrotalcites industrially synthesized.

As synthetic hydrotalcites, there are, for example, DHT-4A-2, DHT-4A, KW-2100, and KW-2200 (made by Kyowa Kogyo Co., Ltd.).

The hydrotalcite may be added as an acid-acceptor for the chlorosulfonated polymer and shows improved heat resistance, cold resistance, and water resistance in a specific composition according to the invention.

The addition amount of the hydrotalcite is from 10 to 35 parts by weight. If the amount is less than 10 parts by weight, the desired water resisting and heat resisting effects cannot be expected. On the other hand, if the amount is over 35 parts by weight, large faults such as an increase in viscosity of the composition and an increase in hardness of the vulcanized product occur.

The addition amount thereof is more preferably from 13 to 23 parts by weight for giving good balance of heat resistance and water resistance and excellent workability.

A thiuram is generally known as a vulcanization accelerator. Examples thereof are dipentamethylenethiuram tetrasulfide (TRA), tetramethylthiuram monosulfide (TS), tetramethylthiuram disulfide (TT or TMTD), and tetraethylthiuram disulfide (TET).

The thiuram is used in an amount of from 0.5 to 5 parts by weight. If the amount is less than the aforesaid range, the vulcanization speed and the vulcanization density are not increased, while if the amount is larger than the range, the water resistance is reduced. The amount thereof is preferably from 1 to 3 parts by weight.

A maleimide is used as a vulcanization accelerator or an antioxidant, and an example thereof is N,N'-m-phenylenediaminedimaleimide. The maleimide is also commercially available as Vulnoc® PM or HVA-2.

The maleimide is used in an amount of from 0.5 to 5 parts by weight and is preferably from 1 to 3 parts by weight for increasing the heat resistance.

The chlorosulfonated ethylene•$\alpha$-olefin copolymer composition according to the present invention may further contain (e) from 0.2 to 4 parts by weight of a dithiocarbamic acid salt. The addition of the dithiocarbamic acid salt can further improve the heat resistance. If the addition amount of the dithiocarbamic acid salt is less than 0.2 part by weight, an improving effect in heat resistance is not remarkable, whereas if it is over 4 parts by weight, no further improving effect in heat resistance is achieved. The addition amount of the dithiocarbamic acid salt is preferably from 0.3 to 3 parts by weight, more preferably from 0.5 to 2 parts by weight.

Examples of the dithiocarbamic acid salt include nickel dibutyldithiocarbamate (NBC), nickel diethyldithiocarbamate (NEC), zinc dibuthyldithiocarbamate, zinc diethyldithiocarbamate. Particularly preferred is nickel dibutyldithiocarbamate (NBC).

In a specified composition of the present invention, the addition of the dithiocarbamic acid salt is quite effective in improving the heat resistance.

That is, when allowed to stand at high temperatures, the vulcanized product's change of elongation is less and its compression set is small at high temperatures. This is because the dithiocarbamic acid salt directly acts on the vulcanization mechanism of the chlorosulfonated ethylene•$\alpha$-olefin copolymer of the present invention in a specific vulcanization system.

The chlorosulfonated ethylene•$\alpha$-olefin copolymer is vulcanized by the co-action of the hydrotalcite, the thiuram, the maleimide, and optionally, the dithiocarbamic acid salt.

The vulcanization mechanism has not yet been clarified, but the important matter in this invention is that the aforesaid improvement can be attained by a specific combination in this invention.

The polymer composition of this invention may, if necessary, further obtain other ordinary rubber compounding ingredients such as a reinforcing agent, a filler, a plasticizer, an antioxidant, a processing aid, in addition to aforesaid indispensable components (a), (b), (c), (d), and optionally, (e).

Suitable reinforcing agents and fillers, include for example, carbon black, white carbon, calcium carbonate, clay, talc, and titanium oxide.

Suitable plasticizers include, for example, various oils, esters, and chlorinated paraffins.

Suitable antioxidants include, for example, amine compounds and phenolic compounds.

Suitable processing aids include for example, low molecular weight polyethylene and metal soaps.

In addition, as described above, in this invention, an improvement can be attained by the proper vulcanization of a chlorosulfonated ethylene•$\alpha$-olefin copolymer. Therefore, in the case of using materials directly giving influences on the vulcanization, such as a vulcanizing agent and a vulcanization accelerator together with the aforesaid indispensable components in this invention, the addition amount, the kind, thereof must be carefully selected. For example, when a vulcanizing agent or a vulcanization accelerator is used together with the aforesaid components, the addition amount thereof must be less than 3 parts by weight.

The chlorosulfonated copolymer composition of this invention may be obtained by compounding the aforesaid components by an internal mixer such as a Banbury mixer and an inter mixer or an ordinary rubber mixer such as an open roll mill.

The composition thus obtained may be vulcanized by press vulcanization, steam vulcanization, ultra high frequency (UHF) vulcanization, hot air vulcanization, to provide vulcanized products.

The following examples are intended to illustrate the present invention more practically but not to limit it in any way.

In addition, the values used in these examples were obtained according to the following measurement methods.

| Mole ratio of ethylene to butene-1: | Analyzed by $^{13}$C-NMR (nuclear magnetic resonance) |
|---|---|
| Melt index: | JIS K 7210 |
| Density: | JIS K 7112 |
| Mooney viscosity: ($ML_{1+4}$, 100°C) | JIS K 6300 |
| Vulcanized rubber properties | JIS K 6301. |

In addition, the chlorosulfonated ethylene•butene-1 copolymers used in these examples were prepared as follows.

Chlorosulfonated copolymer used in Examples 1-4 & 7-9 and Comparison Examples 1-3

After dissolving 3360 g of an ethylene•butene-1 copolymer (melt index: 4 g/10 min., density: 0.89 g/cm$^3$) composed of 91.7 mole% ethylene and 8.3 mole% butene-1 in carbon tetrachloride, the copolymer was reacted with 5620 g of sulfuryl chloride with the addition of 12 g of $\alpha,\alpha'$-azobisisobutyronitrile as a radical generating agent and 0.25 g of pyridine as a promoter.

After the reaction was over, acid components remaining in the solution were removed, and then 17 g of 2,2'-bis(4-glycidyloxyphenyl)propane was added thereto. Then, the solution was fed to a drum dryer by an ordinary manner to separate the product from the solvent.

The result of the analysis of the chlorosulfonated ethylene•butene-1 copolymer thus obtained showed that the product contained 30.1% by weight of chlorine and 1.02% by weight sulfur. The Mooney viscosity ($ML_{1+4}$, 100°C) was 58. The chorosulfonated copolymer was defined as A-1.

Chlorosulfonated copolymer used in Example 5

By following the same procedure as above except that the following ethylene•butene-1 copolymer was used as the raw material, a chlorosulfonated copolymer was obtained.

Ethylene•butene-1 copolymer:

| | |
|---|---|
| Ratio of ethylene/butene-1: | 92.3/7.7 |
| Melt index: | 3 g/10 min. |
| Density: | 0.89 g/cm$^3$. |

The result of the analysis of the chlorosulfonated ethylene•butene-1 copolymer thus obtained showed that the copolymer contained 30.0% by weight of chlorine and 0.99% by weight sulfur. The Mooney viscosity ($ML_{1+4}$, 100°C) thereof was 65. The chlorosulfonated copolymer was defined as A-2.

Chlorosulfonated copolymer used in Example 6

By following the same procedure as above except that the following ethylene•butene-1 copolymer was used as the raw material, a chlorosulfonated copolymer was obtained.

Ethylene•butene-1 copolymer:

| | |
|---|---|
| Ratio of ethylene/butene-1: | 92.3/7.7 |
| Melt index: | 8 g/10 min. |
| Density: | 0.89 g/cm$^3$. |

The result of the analysis of the chlorosulfonated ethylene•butene-1 copolymer thus obtained showed that the copolymer contained 30.0% by weight of chlorine and 1.01% by weight sulfur. The Mooney viscosity ($ML_{1+4}$, 100°C) was 44. The chlorosulfonated copolymer was defined as A-3.

EXAMPLES 1 TO 6 AND COMPARISON EXAMPLES 1 TO 4

The compounding ingredients shown in Table 1 below were kneaded by means of an open roll mill and then vulcanized for 40 minutes at 150°C to provide each vulcanized sheet.

Thereafter, the properties of the vulcanized products were measured, and the results obtained are shown in Table 1. In addition, for determining the cold resistance of each product, a Gehman torsion test was used.

TABLE 1

| Components: | Example 1 | Example 2 | Example 3 | Example 4 | Example 5 | Example 6 | Comparison Example 1 | Comparison Example 2 | Compraison Example 3 | Comparison Example 4 |
|---|---|---|---|---|---|---|---|---|---|---|
| A-1[*1] | 100 | 100 | 100 | 100 | | | 100 | 100 | 100 | |
| A-2[*1] | | | | | 100 | | | | | |
| A-3[*1] | | | | | | 100 | | | | |
| Hypalon® 40[*2] | | | | | | | | | | 100 |
| Hydrotalcite DHT-4A-2[*3] | 15 | 20 | | | 15 | 15 | | 5 | 15 | 15 |
| Hydrotalcite KW-2100[*3] | | | 15 | 20 | | | | | | |
| Magnesia | | | | | | | 5 | | | |
| SRF carbon black | 35 | 35 | 35 | 35 | 35 | 35 | 35 | 35 | 35 | 35 |
| Dioctyl sebacate (DOS) | 8 | 8 | 8 | 8 | 8 | 8 | 8 | 8 | 8 | 8 |
| Suntight® | 2 | 2 | 2 | 2 | 2 | 2 | 2 | 2 | 2 | 2 |
| Accelerator TRA | 2 | 2 | 2 | 2 | 2 | 2 | 2 | 2 | | 2 |
| Accelerator PM | 2 | 2 | 2 | 2 | 2 | 2 | 2 | 2 | | 2 |

TABLE 1 (cont'd)

| | Example 1 | Example 2 | Example 3 | Example 4 | Example 5 | Example 6 | Comparison Example 1 | Comparison Example 2 | Compraison Example 3 | Comparison Example 4 |
|---|---|---|---|---|---|---|---|---|---|---|
| Vulcanization Characteristics: | | | | | | | | | | |
| Tensile Properties | | | | | | | | | | |
| $H_S$ (JIS A) | 67 | 69 | 69 | 72 | 67 | 66 | 66 | 65 | 67 | 67 |
| $T_B$ (kg/cm$^2$) | 224 | 221 | 216 | 211 | 225 | 217 | 199 | 196 | 213 | 205 |
| $E_B$ (%) | 310 | 300 | 300 | 290 | 300 | 330 | 370 | 350 | 300 | 290 |
| $M_{100}$ (kg/cm$^2$) | 33 | 37 | 61 | 68 | 34 | 31 | 39 | 53 | 40 | 37 |
| Heat Resistance | | | | | | | | | | |
| $\Delta E_B$ (%)[*4] | -18 | -23 | -15 | -20 | -18 | -19 | -29 | -22 | -31 | -18 |
| C-Set (%)[*5] | 70 | 69 | 75 | 72 | 70 | 72 | 81 | 83 | 91 | 71 |
| Water Resistance | | | | | | | | | | |
| $\Delta V$ (%)[*6] | 5.9 | 4.5 | 5.0 | 5.3 | 5.8 | 5.9 | 29.5 | 22.3 | 6.6 | 5.7 |

EP 0 306 121 B2

## TABLE 1 (cont'd)

| Gehman Torsion Test | Example 1 | Example 2 | Example 3 | Example 4 | Example 5 | Example 6 | Comparison Example 1 | Comparison Example 2 | Comparison Example 3 | Comparison Example 4 |
|---|---|---|---|---|---|---|---|---|---|---|
| $T_2$ (°C) | -20 | -19 | -24 | -23 | -20 | -21 | -19 | -21 | -20 | -11 |
| $T_5$ (°C) | -27 | -26 | -28 | -28 | -26 | -28 | -26 | -28 | -27 | -18 |
| $T_{10}$ (°C) | -31 | -31 | -31 | -31 | -30 | -32 | -29 | -32 | -31 | -22 |
| $T_{100}$ (°C) | -36 | -36 | -37 | -36 | -35 | -36 | -35 | -36 | -36 | -30 |

*1: Chlorosulfonated ethylene·α-olefin copolymer

*2: Chlorosulfonated polyethylene, made by E. I. Du Pont

*3: Produced by Kyowa Kagaku Kogyo K.K.

*4: Change of elongation after 70 hours at 120°C

*5: Compression set after 22 hours at 120°C

*6: Volume change after 8 hours in boiling water

## EXAMPLES 7 TO 9

The compounding ingredients shown in Table 2 below were kneaded by means of an open roll mill and then vulcanized for 30 minutes at 150°C to provide vulcanized sheets.

Thereafter, the properties of the vulcanized products were measured, and the results obtained are shown in Table 2. In addition for determining the cold resistance of each product, a Gehman torsion test

9

was used.

## TABLE 2

| Components: | Example 7 | Example 8 | Example 9 |
|---|---|---|---|
| A-1$^{*1}$ Hypalon® 40$^{*2}$ | 100 | 100 | 100 |
| Hydrotalcite DHT-4A-2$^{*3}$ Magnesia | 20 | 20 | 20 |
| SRF carbon black | 35 | 35 | 35 |
| Dioctyl sebacate (DOS) | 8 | 8 | 8 |
| Suntight® | 2 | 2 | 2 |
| Accelerator TRA | 1 | 1 | 1 |
| Accelerator PM | 2 | 1.5 | 1.5 |
| NBC | 1 | 0.5 | 1 |

## TABLE 2 (cont'd)

| Vulcanization Character-istics | Example 7 | Example 8 | Example 9 |
|---|---|---|---|
| Tensile Properties | | | |
| $H_S$ (JIS A) | 72 | 71 | 72 |
| $T_B$ (kg/cm$^2$) | 206 | 212 | 209 |
| $E_B$ (%) | 290 | 320 | 300 |
| $M_{100}$ (kg/cm$^2$) | 61 | 55 | 59 |
| Heat Resistance | | | |
| $\Delta E_B$ (%)$^{*4}$ | -13 | -14 | -13 |
| C-Set (%)$^{*5}$ | 30 | 38 | 33 |
| Water Resistance | | | |
| $\Delta V$ (%)$^{*6}$ | 5.2 | 5.7 | 5.5 |

## TABLE 2 (cont'd)

|  | Example 7 | Example 8 | Example 9 |
|---|---|---|---|
| Gehman Torsion Test |  |  |  |
| $T_2$ (°C) | -19 | -20 | -19 |
| $T_5$ (°C) | -26 | -27 | -27 |
| $T_{10}$ (°C) | -31 | -31 | -31 |
| $T_{100}$ (°C) | -36 | -36 | -36 |

*1: Chlorosulfonated ethylene·α-olefin copolymer

*2: Chlorosulfonated polyethylene, made by E. I. Du Pont

*3: Produced by Kyowa Kagaku Kogyo K.K.

*4: Change of elongation after 70 hours at 120°C

*5: Compression set after 22 hours at 120°C

*6: Volume change after 8 hours in boiling water

As shown in Table 1, the chlorosulfonated ethylene•α-olefin copolymer compositions in Examples 1 to 6 of this invention give vulcanized products having improved heat resistance, cold resistance, and water resistance.

On the other hand, the chlorosulfonated copolymer composition using magnesia as a vulcanizing agent without using a hydrotalcite in Comparison Example 1 gives the vulcanized product without having desired water resistance, Also, the chlorosulfonated copolymer composition in Comparison Example 2 gives the vulcanized product thereof without having desired water resistance due to the less amount of the hydrotalcite. Furthermore, the chlorosulfonated copolymer composition without using a maleimide in Comparison Example 3 gives the vulcanized product inferior in heat resistance, Also, the chlorosulfonated copolymer composition in Comparison Example 4 using Hypalon® 40 (chlorosulfonated polyethylene) in place of a chlorosulfonated ethylene•α-olefin copolymer gives the vulcanized product without having desired cold resistance.

Further, the chlorosulfonated ethylene•α-olefin copolymer compositions in Examples 7 to 9 of this invention give vulcanized products having improved heat resistance, cold resistance, and water resistance, particularly good heat resistance.

Thus, it is clear from these examples and comparison examples that the chlorosulfonated ethylene•α-olefin copolymer composition of this invention can provide a vulcanized product thereof with improved heat resistance, cold resistance, and water resistance.

The chlorosulfonated copolymer composition of this invention is thus particularly useful as materials for making rubber belts such as toothed belts, poly-V-belts.

Furthermore, the chlorosulfonated copolymer composition of this invention can be also applied in other fields of requiring heat resistance, cold resistance, and water resistance, such as sheets, coating materials for cables, hoses.

**Claims**

1. A chlorosulfonated ethylene•alpha-olefin copolymer composition characterised in that it comprises
   (a) 100 parts by height of a chlorosulfonated ethylene•alpha-olefin copolymer containing from 25 to 32% by weight chlorine and from 0.3 to 2.5% by weight sulfur, and having a ratio of ethylene/alpha-olefin of from 98/2 to 60/40,
   (b) from 10 to 35 parts by weight of a hydrotalcite.
   (c) from 0.5 to 5 parts by weight of a thiuram, and
   (d) from 0.5 to 5 parts by weight of a maleimide.

2. A chlorosulfonated copolymer composition according to claim 1, characterised in that the chlorosulfonated ethylene•alpha-olefin copolymer is obtained by chlorinating and chlorosulfonating an ethylen•alpha-olefin copolymer.

3. A chlorosulfonated copolymer composition according to claim 2 characterised in that the ratio of ethylene/alpha-olefin is from 95/5 to 70/30.

4. A chlorosulfonated copolymer composition according to any one of the preceding claims, characterised in that the ethylene•alpha-olefin copolymer is an ethylene•butene-1 copolymer.

5. A chlorosulfonated copolymer composition according to any one of the preceding claims characterised in that the chlorosulfonated ethylene•alpha-olefin copolymer contains from 28 to 31% by weight chlorine.

6. A chlorosulfonated copolymer composition according to any one of the preceding claims characterised in that the chlorosulfonated ethylene•alpha-olefin copolymer contains from 0.5 to 1.5% by weight sulfur.

7. A chlorosulfonated copolymer composition according to any one of the preceding claims characterised in that the composition further comprises (e) from 0.2 to 4 parts by weight of a dithiocarbamic acid salt.

8. A process for the preparation of a chlorosulfonated ethylene•alpha-olefin copolymer composition characterised in that the process comprises adding
   (b) from 10 to 35 parts by weight of a hydrotalcite.
   (c) from 0.5 to 5 parts by weight of thiuram, and
   (d) from 0.5 to 5 parts by weight of maleimide
   to (a) 100 parts by weight of a chlorosulfonated ethylene•alpha-olefin copolymer containing from 25 to 32% by weight chlorine and from 0.3 to 2.5% by weight sulfur, and having a ratio of ethylene/alpha-olefin of from 98/2 to 60/40.

**Patentansprüche**

1. Chlorsulfonierte Ethylen/alpha-Olefincopolymer-Zusammensetzung, dadurch gekennzeichnet, daß sie umfaßt:
   (a) 100 Gew.-Teile eines chlorsulfonierten Ethylen/alpha-Olefincopolymers, enthaltend 25 bis 32 Gew.-% Chlor und 0,3 bis 2,5 Gew.-% Schwefel, mit einem Verhältnis von Ethylen/alpha-Olefin von 98/2 bis 60/40,
   (b) 10 bis 35 Gew.-Teile Hydrotalcit,
   (c) 0,5 bis 5 Gew.-Teile Thiuram und
   (d) 0,5 bis 5 Gew.-Teile Maleimid.

2. Chlorsulfonierte Copolymer-Zusammensetzung nach Anspruch 1, dadurch gekennzeichnet, daß das chlorsulfonierte Ethylen/alpha-Olefincopolymer durch Chlorierung und Chlorsulfonierung eines Ethylen/alpha-Olefincopolymers erhalten wird.

3. Chlorsulfonierte Copolymer-Zusammensetzung nach Anspruch 2, dadurch gekennzeichnet, daß das Verhältnis von Ethylen/alpha-Olefin 95/5 bis 70/30 beträgt.

**4.** Chlorsulfonierte Copolymer-Zusammensetzung nach einem der vorangehenden Ansprüche, dadurch gekennzeichnet, daß das Ethylen/alpha-Olefincopolymer ein Ethylen/buten-1-Copolymer ist.

**5.** Chlorsulfonierte Copolymer-Zusammensetzung nach einem der vorangehenden Ansprüche, dadurch gekennzeichnet, daß das chlorsulfonierte Ethylen/alpha-Olefincopolymer 28 bis 31 Gew.-% Chlor enthält.

**6.** Chlorsulfonierte Copolymer-Zusammensetzung nach einem der vorangehenden Ansprüche, dadurch gekennzeichnet, daß das chlorsulfonierte Ethylen/alpha-Olefincopolymer 0,5 bis 1,5 Gew.-% Schwefel enthält.

**7.** Chlorsulfonierte Copolymer-Zusammensetzung nach einem der vorangehenden Ansprüche, dadurch gekennzeichnet, daß die Zusammensetzung zusätzlich (e) 0,2 bis 4 Gew.-Teile eines Dithiocarbaminsäuresalzes enthält.

**8.** Verfahren zur Herstellung einer chlorsulfonierten Ethylen/alpha-Olefincopolymer-Zusammensetzung, dadurch gekennzeichnet, daß das Verfahren die Zugabe von
(b) 10 bis 35 Gew.-Teilen Hydrotalcit,
(c) 0,5 bis 5 Gew.-Teile Thiuram und
(d) 0,5 bis 5 Gew.-Teile Maleimid zu
(a) 100 Gew.-Teilen eines chlorsulfonierten Ethylen/alpha -Olefincopolymers, enthaltend 25 bis 32 Gew.-% Chlor und 0,3 bis 2,5 Gew.-% Schwefel, mit einem Verhältnis von Ethylen/alpha-Olefin von 98/2 bis 60/40 umfaßt.

**Revendications**

**1.** Une composition de copolymère d'éthylène-α-oléfine chlorosulfoné, caractérisée en ce qu'elle comprend :
(a) 100 parties en poids d'un copolymère d'éthylène-α-oléfine chlorosulfoné contenant de 25 à 32 % en poids de chlore et de 0,3 à 2,5 % en poids de soufre, et ayant un rapport éthylène/α-oléfine de 98/2 à 60/40,
(b) de 10 à 35 parties en poids d'hydrotalcite,
(c) de 0,5 à 5 parties en poids d'un thiurame, et
(d) de 0,5 à 5 parties en poids d'un maléimide.

**2.** Une composition de copolymère chlorosulfoné selon la revendication 1, caractérisée en ce que le copolymère d'éthylène-α-oléfine chlorosulfoné est obtenu par chloruration et chlorosulfonation d'un copolymère d'éthylène-α-oléfine.

**3.** Une composition de copolymère chlorosulfoné selon la revendication 2, caractérisée en ce que le rapport éthylène/α-oléfine est de 95/5 à 70/30.

**4.** Une composition de copolymère chlorosulfoné selon l'une quelconque des revendications précédentes, caractérisée en ce que le copolymère d'éthylène-α-oléfine est un copolymère d'éthylène-butène-1.

**5.** Une composition de copolymère chlorosulfoné selon l'une quelconque des revendications précédentes, caractérisée en ce que le copolymère d'éthylène-α-oléfine chlorosulfoné contient de 28 à 31 % en poids de chlore.

**6.** Une composition de copolymère chlorosulfoné selon l'une quelconque des revendications précédentes, caractérisée en ce que le copolymère d'éthylène-α-oléfine chlorosulfoné contient de 0,5 à 1,5 % en poids de soufre.

**7.** Une composition de copolymère chlorosulfoné selon l'une quelconque des revendications précédentes, caractérisée en ce que la composition comprend en outre (e) de 0,2 à 4 parties en poids d'un sel d'acide dithiocarbamique.

8. Un procédé de préparation d'un copolymère d'éthylène-α-oléfinechlorosulfoné, caractérisé en ce que le procédé comprend l'addition

(b) de 10 à 35 parties en poids d'un hydrotalcite,

(c) de 0,5 à 5 parties en poids de thiurame, et

(d) de 0,5 à 5 parties en poids de maléimide

à (a) 100 parties en poids d'un copolymère d'éthylène-α-oléfine chlorosulfoné contenant de 25 à 32 % en poids de chlore et de 0,3 à 2,5 % en poids de souffle, et ayant un rapport d'éthylène/α-oléfine de 98/2 à 60/40.